# EUROPÄISCHE PATENTSCHRIFT

(11) **EP 3 329 300 B1**
(45) Veröffentlichungstag und Bekanntmachung des Hinweises auf die Patenterteilung: **21.04.2021**
(21) Anmeldenummer: 16747474.1
(22) Anmeldetag: 27.07.2016
(51) Int. Cl.: G01S 17/42, G01S 17/931, G01S 7/481

(54) **OPTISCHE SENSORVORRICHTUNG FÜR EIN KRAFTFAHRZEUG ZUM ZWEIDIMENSIONALEN ABTASTEN EINES UMGEBUNGSBEREICHES DES KRAFTFAHRZEUGS, KRAFTFAHRZEUG SOWIE VERFAHREN**
OPTICAL SENSOR APPARATUS FOR A VEHICLE FOR TWO DIMENSIONAL SCANNING THE SURROUNDINGS OF THE VEHICLE, VEHICLE AND METHOD
DISPOSITIF CAPTEUR OPTIQUE POUR UNE VÉHICULE POUR BALAYAGE LES ENVIRONS DE LA VÉHICULE EN DEUX DIMENSIONS, VÉHICULE ET PROCÉDÉ

(30) Priorität: 28.07.2015 DE 102015112297
(43) Veröffentlichungstag der Anmeldung: 06.06.2018
(73) Patentinhaber: Valeo Schalter und Sensoren GmbH, 74321 Bietigheim-Bissingen (DE)
(72) Erfinder: LIN, Lin, 74321 Bietigheim-Bissingen (DE); SIMON, Jan, 74321 Bietigheim-Bissingen (DE); HORVATH, Peter, 74321 Bietigheim-Bissingen (DE); SCHULER, Thomas, 74321 Bietigheim-Bissingen (DE)
(74) Vertreter: Withopf, Kristina
(86) Internationale Anmeldenummer: PCT/EP2016/067873
(87) Internationale Veröffentlichungsnummer: WO 2017/017126

(56) Entgegenhaltungen:
- EP-A1- 3 070 497
- DE-A1-102004 047 022
- DE-A1-102011 001 387

## Beschreibung

Die Erfindung betrifft eine optische Sensorvorrichtung für ein Kraftfahrzeug zum zweidimensionalen Abtasten eines Umgebungsbereiches des Kraftfahrzeugs, mit einer Sendeeinrichtung aufweisend eine Lichtquelle zum Aussenden eines Lichtstrahls und eine Ablenkeinrichtung zum Ablenken des Lichtstrahls zu vorgegebenen Abtastschritten entlang einer ersten Richtung um jeweils einen ersten Ablenkschrittwinkel und/oder entlang einer zweiten Richtung um jeweils einen zweiten Ablenkschrittwinkel und mit einer Empfangseinrichtung zum Empfangen des in dem Umgebungsbereich reflektierten Lichtstrahls. Die Erfindung betrifft außerdem ein Kraftfahrzeug sowie ein Verfahren zum zweidimensionalen Abtasten eines Umgebungsbereiches eines Kraftfahrzeugs.

Im vorliegenden Fall richtet sich das Interesse auf eine optische Sensorvorrichtung für ein Kraftfahrzeug, insbesondere einen sogenannten Scanning-Lidar-Sensor. Mittels der optischen Sensorvorrichtung kann ein Umgebungsbereich des Kraftfahrzeugs überwacht werden. Dabei können beispielsweise Objekte in dem Umgebungsbereich erfasst werden und Informationen über das erfasste Objekt, beispielsweise ein Abstand des Objektes zu dem Kraftfahrzeug oder geometrische Abmessungen des Objektes, einem Fahrerassistenzsystem bereitgestellt werden. Eine solche optische Sensorvorrichtung in Form von einem Scanning-Lidar-Sensor ist bereits aus dem Stand der Technik bekannt. Bei Scanning-Lidar-Sensoren (Lidar - light detection and ranging) wird üblicherweise ein Lichtstrahl, beispielsweise ein Laserstrahl, auf eine Ablenkeinrichtung, beispielsweise einen Umlenkspiegel, ausgesendet und an der Ablenkeinrichtung in den Umgebungsbereich reflektiert. Die Ablenkeinrichtung ist dabei in der Regel drehbar gelagert und wird mittels einer Antriebseinheit zum Drehen um eine Drehachse angetrieben. Dadurch wird der Lichtstrahl zu vorgegebenen Abtastschritten beziehungsweise Abtastzeitpunkten um jeweils einen Ablenkschrittwinkel abgelenkt und der Umgebungsbereich somit abgetastet beziehungsweise abgescannt.

Der Lichtstrahl, welcher an dem Objekt in dem Umgebungsbereich reflektiert wurde, wird von einer Empfangseinrichtung der optischen Sensorvorrichtung erfasst. Eine solche Empfangseinrichtung gemäß dem Stand der Technik weist in der Regel ein Empfangselement auf. Aus einer Empfangseinrichtung mit nur einem Empfangselement ergibt sich der Nachteil, dass das Empfangselement ein besonders großes Sichtfeld aufweist, wodurch auch Störsignale, beispielsweise Sonnenlicht, aus allen Richtungen von dem Empfangselement empfangen werden. Durch dieses Rauschen wird ein Signal-Rausch-Abstand der optischen Sensorvorrichtung verringert.

DE 10 2004 047 022 A1 offenbart eine Überwachungsvorrichtung für Raumbereiche, welche einen Empfänger aufweist, dem eine anamorphotische Optik zugeordnet ist. Ferner verfügt die Überwachungsvorrichtung über einen Sender, der mit Strahlungspulsbündeln ein dem Empfänger zugeordnetes Gesichtsfeld abtastet. Durch eine in einer Auswerteeinheit durchgeführte Strahlungslaufzeitbestimmung mit Kurzzeitintegration kann ein Entfernungsbild eines Objekts im Gesichtsfeld durchgeführt werden.

DE 10 2011 011 387 A1 offenbart ein Verfahren und System zum Abtasten eines Abtastfeldes, wobei das Verfahren die folgenden Schritte umfasst: Aussenden von Testlichtsignalen mittels einer Sendeanordnung, wobei die Testlichtsignale von den Sendern in ein jeweils einem der Sender zugeordnetes Sendesegment eines Abtastfeldes gesendet werden derart, dass das zugeordnete Sendesegment das Abtastfeld in einer ersten Dimension vollständig und in einer zweiten Dimension teilweise erfasst, Überstreichen des Abtastfeldes mit den Testlichtsignalen, indem die Testlichtsignale von den Sendern in zugeordnete Sendesegmente gelenkt werden, die längs der zweiten Dimension im Abtastfeld nebeneinander gebildet sind, Erfassen von Messlichtsignalen mittels Empfängern einer Empfängeranordnung, wobei die Messlichtsignale aus einem der Empfänger zugeordneten Empfangssegment auf den zugeordneten Empfänger gelenkt werden, derart, dass das zugeordnete Empfangssegment das Abtastfeld in der zweiten Dimension vollständig und in der ersten Dimension teilweise erfasst, und das Abtastfeld überstreichendes Erfassen der Messlichtstrahlen, indem die Messlichtsignale von mehreren Empfangssegmenten auf einem der zugeordneten Empfänger gelenkt werden, wobei die Empfangssegmente im Abtastfeld längs der ersten Dimension nebeneinander und die Sendesegmente jeweils kreuzend gebildet sind.

EP 3 070 497 A1 offenbart eine Objekterfassungsvorrichtung umfassend eine Lichtquelle, die eine Vielzahl von Lichtsendeeinheiten umfasst, die in einer Unterabtastrichtung angeordnet sind; eine Ablenkeinrichtung, die Licht von der Lichtquelle ablenkt; und einen optischen Detektor, der eine Vielzahl von Lichtempfangseinheiten umfasst, die entsprechend der Mehrzahl von Lichtemissionseinheiten in der Unterabtastrichtung angeordnet sind, und Licht empfängt, das von dem Deflektor abgelenkt und von einem Objekt reflektiert wurde.

Es ist Aufgabe der vorliegenden Erfindung, eine besonders einfache und störsignalunanfällige optische Sensorvorrichtung zu realisieren, mittels welcher ein Umgebungsbereich besonders zuverlässig erfasst werden kann.

Diese Aufgabe wird erfindungsgemäß durch eine optische Sensorvorrichtung, ein Kraftfahrzeug sowie ein Verfahren mit den Merkmalen gemäß den unabhängigen Patentansprüchen gelöst.

Eine optische Sensorvorrichtung für ein Kraftfahrzeug dient zum zweidimensionalen Abtasten eines Umgebungsbereiches des Kraftfahrzeugs. Die optische Sensorvorrichtung umfasst eine Sendeeinrichtung aufweisend eine Lichtquelle zum Aussenden eines Lichtstrahls und eine Ablenkeinrichtung zum Ablenken des Lichtstrahls zu vorgegebenen Abtastschritten entlang einer ersten Richtung um jeweils einen ersten Ablenkschrittwinkel und entlang einer zweiten Richtung um jeweils einen zweiten Ablenkschrittwinkel. Die optische Sensorvorrichtung weist außerdem eine Empfangseinrichtung zum Empfangen des in dem Umgebungsbereich reflektierten Lichtstrahls auf. Darüber hinaus umfasst die Empfangseinrichtung mehrere Empfangselemente, wobei jedem Empfangselement für zumindest eine der Richtungen zumindest zwei Abtastschritte zum Erfassen des in den jeweiligen Abtastschritten ausgesendeten und in dem Umgebungsbereich reflektierten Lichtstrahls zugeordnet sind. Außerdem weist die Empfangseinrichtung zum Vergrößern von Erfassungsbereichen der Empfangselemente entlang derjenigen Richtung mit den zumindest zwei zugeordneten Abtastschritten eine optisch abbildende Einrichtung auf.

Die optische Sensorvorrichtung ist insbesondere als ein Scanning-Lidar-Sensor ausgestaltet, welcher zum Erfassen des Umgebungsbereiches des Kraftfahrzeugs durch Abtasten des Umgebungsbereiches mittels eines Lichtstrahls ausgebildet ist. Der Lichtstrahl wird dabei von der Lichtquelle auf die Ablenkeinrichtung ausgesendet. Die Lichtquelle kann beispielsweise als ein Laser oder als eine Laserdiode ausgestaltet sein, welcher oder welche als den Lichtstrahl einen Laserstrahl aussendet.

Die Ablenkeinrichtung, auf welche die Lichtquelle den Lichtstrahl aussendet, kann beispielsweise drehbar gelagerte Umlenkspiegel umfassen, deren Orientierung zum Ablenken des Lichtstrahls entlang der zwei Richtungen und damit zum Erzeugen einer Abtastbewegung beziehungsweise einer Scanbewegung in die zwei Richtungen beziehungsweise Dimensionen verändert werden kann. Die erste Richtung kann dabei beispielsweise einer vertikalen Raumrichtung entsprechen, entlang welcher der Umgebungsbereich abgetastet wird. Bei Veränderung der vertikalen Orientierung der Ablenkeinrichtung überstreicht der an der Ablenkeinrichtung reflektierte Lichtstrahl den Umgebungsbereich in vertikaler Raumrichtung. Die zweite Richtung kann einer horizontalen Raumrichtung entsprechen, entlang welcher der Umgebungsbereich abgetastet wird. Bei Verändern der horizontalen Orientierung der Ablenkeinrichtung überstreicht der an der Ablenkeinrichtung reflektierte Lichtstrahl den Umgebungsbereich in horizontaler Raumrichtung.

Der Lichtstrahl wird von der Ablenkeinrichtung schrittweise, also zu den vorgegebenen Abtastschritten, insbesondere zeitgesteuert, abgelenkt. Dazu wird in den Abtastschritten beziehungsweise zu den Abtastzeitpunkten der Lichtstrahl schrittweise um jeweils den ersten und/oder den zweiten Ablenkschrittwinkel abgelenkt. Die ersten Ablenkschrittwinkel und/oder die zweiten Ablenkschrittwinkel sind insbesondere gleich groß, sodass die Abtastschritte entlang der ersten Richtung und/oder der zweiten Richtung äquidistant sind. Durch das schrittweise Ablenken des Lichtstrahls um den ersten und/oder den zweiten Ablenkschrittwinkel pro Ablenkschritt wird der Lichtstrahl zu jedem Abtastschritt entlang der ersten und/oder der zweiten Richtung in eine dem jeweiligen Abtastschritt zugeordnete Abtastsenderichtung orientiert. Beim Ablenken des Lichtstrahls entlang der ersten Richtung, also beispielsweise beim vertikalen Überstreichen des Umgebungsbereiches, wird der Lichtstrahl beispielsweise bei einem ersten Abtastschritt entlang der ersten Richtung in eine dem ersten Abtastschritt zugeordnete erste Abtastsenderichtung orientiert. Bei einem auf den ersten Abtastschritt folgenden zweiten Abtastschritt entlang der ersten Richtung wird der Lichtstrahl in eine dem zweiten Abtastschritt zugeordnete zweite Abtastsenderichtung orientiert. Ein Winkel zwischen der ersten und der zweiten Abtastsenderichtung entlang der ersten Richtung entspricht dabei dem ersten Ablenkschrittwinkel. Das schrittweise Ablenken um den ersten Ablenkschrittwinkel kann beispielsweise für die vorbestimmte Anzahl an Abtastschritten zum Abtasten des Umgebungsbereiches entlang der ersten Richtung wiederholt werden. Ein Gesamtöffnungswinkel eines Gesamterfassungsbereiches der Empfangseinrichtung entlang der ersten Richtung, also beispielsweise ein vertikaler Gesamtöffnungswinkel, entspricht bei dabei dem Produkt aus der vorbestimmten Anzahl an Abtastschritten entlang der ersten Richtung und dem ersten Ablenkschrittwinkel.

Beim Ablenken des Lichtstrahls entlang der zweiten Richtung, also beispielsweise beim horizontalen Überstreichen des Umgebungsbereiches, wird der Lichtstrahl beispielsweise bei einem ersten Abtastschritt entlang der zweiten Richtung in eine dem ersten Abtastschritt zugeordnete erste Abtastsenderichtung orientiert. Bei einem auf den ersten Abtastschritt folgenden zweiten Abtastschritt entlang der zweiten Richtung wird der Lichtstrahl in eine dem zweiten Abtastschritt zugeordnete zweite Abtastsenderichtung orientiert. Ein Winkel zwischen der ersten und der zweiten Abtastsenderichtung entlang der zweiten Richtung entspricht dabei dem zweiten Ablenkschrittwinkel. Das schrittweise Ablenken um den zweiten Ablenkschrittwinkel kann beispielsweise für eine vorbestimmte Anzahl an Abtastschritten zum Abtasten des Umgebungsbereiches entlang der zweiten Richtung wiederholt werden. Ein Gesamtöffnungswinkel des Gesamterfassungsbereiches der Empfangseinrichtung entlang der zweiten Richtung, also beispielsweise ein horizontaler Gesamtöffnungswinkel, entspricht bei dabei dem Produkt aus der vorbestimmten Anzahl an Abtastschritten entlang der zweiten Richtung und dem zweiten Ablenkschrittwinkel.

Entlang welcher der Richtungen der Lichtstahl abgelenkt werden soll, ist abhängig von einer zu erzeugenden Ablenkbewegung beziehungsweise Scanbewegung. Um beispielsweise den Umgebungsbereich rasterartig abzutasten, kann eine mäanderförmige Ablenkbewegung erzeugt werden. Dies bedeutet, dass der Lichtstrahl für eine vorbestimmte Anzahl an Abtastschritten entlang der zweiten Richtung, also beispielsweise entlang der horizontalen Raumrichtung, zum Überstreichen einer ersten Zeile in dem Umgebungsbereich abgelenkt wird. Dabei folgen die Abtastschritte entlang der zweiten Richtung für die vorbestimmte Anzahl an Abtastschritten entlang der zweiten Richtung unmittelbar aufeinander. Bei einem Zeilenende, also bei Erreichen der vorbestimmten Anzahl an Abtastschritten entlang der zweiten Richtung, wird der Lichtstrahl in einem Abtastschritt entlang der ersten Richtung abgelenkt, also in eine beispielsweise unter der ersten Zeile liegenden zweiten Zeile gelenkt. Daraufhin wird der Lichtstrahl wieder für die vorbestimmte Anzahl an Abtastschritten entlang der zweiten Richtung zum Überstreichen der zweiten Zeile in dem Umgebungsbereich abgelenkt. Die Abtastschritte entlang der ersten Richtung folgen also nicht unmittelbar aufeinander. Ein einmaliges rasterartiges Überstreichen des Umgebungsbereiches entspricht dabei einem Abtastzyklus.

Die in dem Umgebungsbereich an einer Reflexionsposition reflektierten Lichtstrahlen werden von den Empfangselementen der Empfangseinrichtung empfangen. Dabei ist es vorgesehen, dass jedem Empfangselement für die erste Richtung und/oder für die zweite Richtung zumindest zwei Abtastschritte innerhalb eines Abtastzyklus zugeordnet sind. Durch die Zuordnung von zumindest zwei Abtastschritten sind jedem Empfangselement somit auch zwei abtastschrittspezifische Abtastsenderichtungen zugeordnet. Dies bedeutet, dass jedes Empfangselement zumindest zwei Reflexionen des Lichtstrahls empfängt, welcher zu den jeweiligen, den Empfangselementen zugeordneten Abtastschritten in die den Abtastschritten zugeordneten Abtastsenderichtungen ausgesendet wurden.

Durch das Bereitstellen von zumindest zwei Empfangselementen ergibt sich der Vorteil, dass jedes Empfangselement einen im Vergleich zu einer Empfangseinrichtung mit nur einem Empfangselement, welches insbesondere eine ähnlich große Fläche aufweist wie eine gemeinsame Fläche der zumindest zwei Empfangselemente, verschmälerten Erfassungsbereich beziehungsweise Sichtfeld aufweist. Durch den verschmälerten Erfassungsbereich wird ein Anteil an Störsignalen, insbesondere Sonnenlicht, aus unterschiedlichen Richtungen, verringert und dadurch ein Signal-Rausch-Abstand der optischen Sensorvorrichtung erhöht.

Um dabei die Reflexionen des Lichtstrahls in den zugeordneten Abtastschritten, welche durch das Aussenden des Lichtstrahls in unterschiedliche Abtastsenderichtungen auch aus unterschiedlichen Richtungen auf das den jeweiligen Abtatschritten zugeordnete Empfangselement der Empfangseinrichtung treffen, zuverlässig empfangen zu können, weist die Empfangseinrichtung die optisch abbildende Einrichtung auf. Die optisch abbildende Einrichtung wird dabei insbesondere zwischen den Empfangselementen und dem Umgebungsbereich positioniert und vergrößert die Erfassungsbereiche der Empfangseinrichtung entlang derjenigen Richtung, entlang welcher der Lichtstrahl zumindest zwei Mal um den entsprechenden Ablenkschrittwinkel abgelenkt wird, also entlang der Richtung, welcher die zumindest zwei Abtastschritte zugeordnet sind.

Vorzugsweise ist jedem Empfangselement ein Abtastschritt entlang der ersten Richtung zugeordnet und zumindest zwei Abtastschritte entlang der zweiten Richtung zugeordnet. Somit ist die Empfangseinrichtung entlang der ersten Richtung vollständig ortsauflösend, da jedem Empfangselement genau eine Abtastsenderichtung, unter welcher der Lichtstrahl in dem zugeordneten Abtastschritt entlang der ersten Richtung ausgesendet wird, zugeordnet ist. Anders ausgedrückt bedeutet dies, dass eine erste Koordinate einer Reflexionsposition, also einer Position in dem Umgebungsbereich, an welcher der Lichtstrahl reflektiert wurde, in der ersten Richtung anhand des aktuell empfangenden Empfangselementes der Empfangseinrichtung eindeutig bestimmt werden kann. Zum Abtasten des Umgebungsbereiches entlang der zweiten Richtung, beispielsweise in horizontaler Raumrichtung, sind jedem Empfangselement dabei die zumindest zwei Abtastschritte zugeordnet. Somit ist die Empfangseinrichtung entlang der zweiten Richtung nicht vollständig ortsauflösend. Mit anderen Worten bedeutet dies, dass eine zweite Koordinate der Reflexionsposition in der zweiten Richtung nicht allein anhand des aktuell empfangenden Empfangselementes bestimmt werden kann.

Es kann vorgesehen sein, dass jedem Empfangselement entlang der zweiten Richtung zehn Abtastschritte zugeordnet. Anders ausgedrückt bedeutet dies, dass die Empfangseinrichtung anhand des empfangenden Empfangselementes nur alle zehn Abtastschritte eine Änderung der Abtastsenderichtung des Lichtstrahls entlang der entsprechenden Richtung erfassen kann. Gemäß dieser Ausführungsform kann eine Anzahl an Empfangselementen bei besonders hohem Signal-Rausch-Abstand der optischen Sensorvorrichtung gering gehalten werden.

Es erweist sich als vorteilhaft, wenn ein Öffnungswinkel eines jeweiligen Erfassungsbereiches der Empfangselemente entlang der ersten Richtung als der erste Ablenkschrittwinkel durch die optisch abbildende Einrichtung vorgegeben ist und ein Öffnungswinkel eines jeweiligen Erfassungsbereiches der Empfangselemente entlang der zweiten Richtung als ein zu einer Anzahl an zugeordneten Abtastschritten korrespondierendes Vielfaches des zweiten Ablenkschrittwinkels durch die optisch abbildende Einrichtung vorgegeben ist. Anders ausgedrückt bedeutet dies, dass die optisch abbildende Einrichtung den Erfassungsbereich derart ausbildet, dass in jedem Abtastschritt, also bei jeder Ablenkung des Lichtstrahls um den jeweiligen Ablenkschrittwinkel, der reflektierte Lichtstrahl von dem zugeordneten Empfangselement empfangen werden kann. In der ersten Richtung, in welcher das jeweilige Empfangselement nur eine Reflexion des Lichtstrahls empfängt, weist die Empfangseinrichtung also ein Auflösungsvermögen auf, welches dem ersten Ablenkschrittwinkel entspricht. In der zweiten Richtung, in welcher das jeweilige Element die vorbestimmte Anzahl an Reflexionen, beispielsweise zehn Reflexionen, empfängt, weist die Empfangseinrichtung ein Auflösungsvermögen auf, welches dem zu der Anzahl an zugeordneten Reflexionen korrespondierenden Vielfachen des zweiten Ablenkschrittwinkels entspricht. Somit können von jedem Empfangselementen zuverlässig alle Reflexionen des unter den zugehörigen Abtastsenderichtungen ausgesendeten Lichtstrahls empfangen werde.

Erfindungsgemäß weist die Empfangseinrichtung eine rasterförmige Anordnung der Empfangselemente auf, wobei Zeilen der rasterförmigen Anordnung der Empfangseinrichtung die Abtastschritte in der ersten Richtung zugeordnet sind und Spalten der rasterförmigen Anordnung der Empfangseinrichtung die Abtastschritte in der zweiten Richtung zugeordnet sind. Dies bedeutet, dass die Empfangseinrichtung eine Matrixanordnung beziehungsweise ein Array aus Empfangselementen aufweist. Die Empfangseinrichtung ist durch die rasterförmige Anordnung der Empfangselemente zweidimensional ortsauflösend. Den Zeilen der rasterförmigen Empfangseinrichtung sind dabei die Abtastschritte in der ersten Richtung zugeordnet. Wenn jedem Empfangselement genau ein Abtastschritt entlang der ersten Richtung zugeordnet ist, so bedeutet dies, dass damit jeder Zeile ein Abtastschritt entlang der ersten Richtung zugeordnet ist. Somit wird anhand der Zeile der rasterförmigen Anordnung, in welcher sich das erfassende Empfangselement befindet, direkt die erste Koordinate der Reflexionsposition in der ersten Richtung erfasst. Anders ausgedrückt bedeutet dies, dass in jeder Spalte der rasterförmigen Anordnung eine Anzahl an Empfangselementen einer Anzahl an Abtastschritten in der ersten Richtung entspricht. Wenn jedem Empfangselement die zumindest zwei Abtastschritte, beispielsweise zehn Abtastschritte, entlang der zweiten Richtung zugeordnet sind, so bedeutet dies, dass jeder Spalte die zumindest zwei Abtastschritte entlang der zweiten Richtung, beispielsweise zehn Abtastschritte, zugeordnet sind. Anders ausgedrückt bedeutet dies, dass eine Anzahl an Empfangselementen in jeder Zeile geringer als eine Anzahl an Abtastschritten in der zweiten Richtung ist.

Gemäß einer Ausführungsform der Erfindung weist die Empfangseinrichtung in jeder Spalte der rasterförmigen Anordnung 120 Empfangselemente auf und in jeder Zeile der rasterförmigen Anordnung 150 Empfangselemente auf. Dies bedeutet, dass die Empfangseinrichtung insgesamt 18000 Empfangselemente aufweist. Durch das Zuordnen von jeweils zumindest zwei Abtastschritten zu einem Empfangselement folgt, dass eine Anzahl an Empfangselementen nicht zu einer Anzahl an Abtastschritten pro Abtastzyklus korrespondiert. Die optische Sensorvorrichtung gemäß dieser Ausführungsform weist aber einen ähnlich guten Signal-Rausch-Abstand auf wie eine Empfangseinrichtung mit einer zu der Anzahl an Abtastschritten korrespondierenden Anzahl an Empfangselementen, ist jedoch deutlich kostengünstiger gestaltet.

Es kann vorgesehen sein, dass die Ablenkeinrichtung dazu ausgelegt ist, den Lichtstrahl um jeweils einen Winkel zwischen mindestens 0,05° und höchstens 0,3° insbesondere 0,1°, als den ersten Ablenkschrittwinkel entlang der ersten Richtung abzulenken und den Lichtstrahl um jeweils einen Winkel zwischen mindestens 0,05°und höchstens 0,3°, insbesondere 0,1°, als den zweiten Ablenkwinkel ent lang der zweiten Richtung abzulenken. Wenn beispielsweise jedem Empfangselement ein Abtastschritt entlang der ersten Richtung zugeordnet ist, so weist der Öffnungswinkel eines Erfassungsbereiches eines Empfangselementes entlang der ersten Richtung bei einem ersten Ablenkschrittwinkel von 0,1°ebenfalls 0,1°auf. We nn jedem Empfangselement beispielsweise zehn Abtastschritte entlang der zweiten Richtung zugeordnet sind, so weist der Öffnungswinkel eines Erfassungsbereiches eines Empfangselementes entlang der zweiten Richtung bei einem Ablenkschrittwinkel von 0,1°1°auf. Anders ausgedrückt bedeutet dies, dass die Empfangseinrichtung entlang der ersten Richtung ein Auflösungsvermögen von dem Wert des ersten Ablenkschrittwinkels, also beispielsweise 0,1°, und entlang der zweiten Richtung ein Auflösun gsvermögen von dem Vielfachen des zweiten Ablenkschrittwinkels, also beispielsweise 1°, aufweist.

Besonders bevorzugt umfasst die Empfangseinrichtung eine Steuereinrichtung, welche dazu ausgelegt ist, anhand des empfangenden Empfangselements und/oder anhand des aktuellen Abtastschrittes Koordinaten einer Reflexionsposition des Lichtstrahls in dem Umgebungsbereich in der ersten Richtung und in der zweiten Richtung zu bestimmen. Anhand der Steuereinrichtung kann also ein Auflösungsvermögen der Empfangseinrichtung insbesondere entlang der Richtung erhöht werden, entlang welcher jedem Empfangselement die zumindest zwei Abtastschritte zugeordnet sind. Insbesondere kann mittels der Steuereinrichtung ein Auflösungsvermögen realisiert werden, welches entlang der ersten und entlang der zweiten Richtung dem jeweiligen Ablenkschrittwinkel entspricht.

Wenn beispielsweise jedem Empfangselement genau ein Abtastschritt entlang der ersten Richtung zugeordnet ist, so kann die erste Koordinate der Reflexionsposition in der ersten Richtung anhand des empfangenden Empfangselements, also beispielsweise anhand der Zeile, in welcher sich das Empfangselement in der rasterförmigen Anordnung befindet, bestimmt werden. In der zweiten Richtung, entlang welcher jedem Empfangselement zumindest zwei Abtastschritte zugeordnet sind, kann die zweite Koordinate anhand des empfangenden Empfangselementes und anhand des aktuellen Abtastschrittes entlang der zweiten Richtung, also anhand der zugeordneten Abtastsenderichtung, von der Steuereinrichtung bestimmt werden. Dies bedeutet, dass die vollständige Ortsauflösung der Empfangseinrichtung entlang der zweiten Richtung mittels der Steuereinrichtung realisiert wird. Eine so gestaltete optische Sensorvorrichtung weist das gleiche Auflösungsvermögen auf, wie eine optische Sensorvorrichtung, welche eine zu der Anzahl an Abtastschritten korrespondierende Anzahl an Empfangselementen aufweist, ist aber in vorteilhafter Weise deutlich kostengünstiger gestaltet.

In einer Ausgestaltung der Erfindung weist die Empfangseinrichtung eine Steuereinrichtung auf, welche dazu ausgelegt ist, einen Abstand einer Reflexionsposition des Lichtstrahls in dem Umgebungsbereich zu der optischen Sensorvorrichtung aus einer Laufzeit des Lichtstrahls zu bestimmen. Die Laufzeit des Lichtstrahls ist dabei eine Zeitdauer zwischen dem Aussenden des Lichtstrahls und dem Empfangen des in dem Umgebungsbereich reflektierten Lichtstrahls. Durch die zusätzliche Bestimmung des Abstandes der Reflexionsposition zu der optischen Sensorvorrichtung, also durch die Bestimmung einer dritten Koordinate der Reflexionsposition in einer dritten Richtung, ist die optische Sensoreinrichtung in vorteilhafter Weise dreidimensional ortsauflösend gestaltet.

Gemäß einer Ausführungsform sind die Empfangselemente als Fotodioden, insbesondere als Lawinenfotodioden, ausgestaltet. Die Empfangseinrichtung weist dabei eine Matrixanordnung beziehungsweise ein Array aus Empfangselementen auf. Die Empfangseinrichtung ist also als ein sogenannter Bildsensor ausgestaltet, welcher als die Empfangselemente entweder Fotodioden, welche in einem Vorwärtsbetrieb betrieben werden, oder Fotodioden, welche in einem Rückwärtsbetrieb betrieben werden, aufweist. Solche rückwärts betriebenen Fotodioden sind dabei als Lawinenfotodioden ausgestaltet.

Gemäß einer weiteren Ausführungsform weist die optisch abbildende Einrichtung zum Vergrößern der Erfassungsbereiche in der jeweiligen Richtung eine Zylinderlinse zum Aufweiten der Erfassungsbereiche in der jeweiligen Richtung auf. Wenn beispielsweise jedem Empfangselement mehrere Abtastschritte entlang der zweiten Richtung, beispielsweise entlang der horizontalen Raumrichtung, zugeordnet sind, so wird von der optisch abbildenden Einrichtung der Erfassungsbereich entlang der zweiten Richtung vergrößert. Dabei wird die Zylinderlinse zwischen den Empfangselementen und dem Umgebungsbereich positioniert. Die Zylinderlinse ist dazu ausgelegt, die den Abtastschritten zugeordneten Reflexionen des Lichtstrahls, welcher entlang der zweiten Richtung in die zu den Abtastschritten korrespondierenden Abtastsenderichtungen ausgesendet wurde, aus dem Umgebungsbereich auf das jeweilige Empfangselement zu fokussieren. Mittels der Zylinderlinse können auf besonders einfache Weise die Erfassungsbereiche der Empfangselemente entlang der zweiten Richtung vergrößert werden, insbesondere ohne die Erfassungsbereiche entlang der ersten Richtung zu verändern.

Auch kann es vorgesehen sein, dass die optisch abbildende Einrichtung zwischen der Zylinderlinse und den Empfangselementen zumindest eine Sammellinse und/oder zwischen den Empfangselementen und dem Umgebungsbereich zumindest eine F-Theta-Linse aufweist. Die Sammellinse dient beispielsweise zum weiteren Fokussieren der von der Zylinderlinse in Richtung der Empfangseinrichtung fokussierten Reflexionen des Lichtstrahls. Bei einer F-Theta-Linse ist die Verschiebung des ausfallenden Lichtstrahls gleich dem Produkt aus einer Brennweite der F-Theta-Linse und dem Einfallswinkel. Damit sind insbesondere Geschwindigkeiten des einfallenden und des ausfallenden Lichtstrahls proportional, sodass mittels F-Theta-Linsen eine schnelle, kostengünstige und kompakte scannenden optische Sensorvorrichtung ohne eine aufwändige Auswerteelektronik realisiert werden kann.

Eine weitere Ausführungsform der Erfindung sieht vor, dass die optisch abbildende Einrichtung zum Vergrößern der Erfassungsbereiche in der jeweiligen Richtung eine Sammellinse mit einer niedrigen Brennweite zum Aufweiten der Erfassungsbereiche entlang beider Richtungen und eine Zylinderlinse zum Verengen der aufgeweiteten Erfassungsbereiche entlang der anderen Richtung aufweist. Die Sammellinse mit der niedrigen Brennweite ist dabei zwischen der Zylinderlinse und den Empfangselementen angeordnet. Die Sammellinse fokussiert dabei die Reflexionen des Lichtstrahls auf das jeweilige Empfangselement. Um nun zu verhindern, dass beispielsweise ein Empfangselement in einer Richtung, beispielsweise in der ersten Richtung, mehrere Reflexionen des Lichtstrahls empfängt, obwohl dem Empfangselement nur ein Abtastschritt in dieser Richtung zugeordnet ist, verengt die Zylinderlinse, welche zwischen der Sammellinse und dem Umgebungsbereich positioniert ist, die Erfassungsbereiche in dieser Richtung wieder, insbesondere dabei ohne die Aufweitung der Erfassungsbereiche in der zweiten Richtung wieder zu verringern.

Die Erfindung betrifft außerdem ein Kraftfahrzeug mit einer optischen Sensorvorrichtung. Die optische Sensorvorrichtung dient zum Erfassen des Umgebungsbereiches des Kraftfahrzeugs. Das Kraftfahrzeug ist insbesondere als ein Personenkraftwagen ausgestaltet.

Die Erfindung betrifft außerdem ein Verfahren zum zweidimensionalen Abtasten eines Umgebungsbereiches eines Kraftfahrzeugs, bei welchem mittels einer Lichtquelle einer Sendeeinrichtung ein Lichtstrahl ausgesendet wird, mittels einer Ablenkeinrichtung der Sendeeinrichtung der Lichtstrahl zu vorgegebenen Abtastschritten entlang einer ersten Richtung um jeweils einen ersten Ablenkschrittwinkel und entlang einer zweiten Richtung um jeweils einen zweiten Ablenkschrittwinkel abgelenkt wird und mittels einer Empfangseinrichtung der an dem Umgebungsbereich reflektierte Lichtstrahl empfangen wird. Darüber hinaus werden zumindest zwei Empfangselementen der Empfangseinrichtung jeweils für zumindest eine der Richtungen zumindest zwei Abtastschritte zum Erfassen des in den jeweiligen Abtastschritten ausgesendeten und reflektierten Lichtstrahls zugeordnet. Außerdem werden die Erfassungsbereiche der zumindest zwei Empfangselemente entlang derjenigen Richtung mit den zumindest zwei zugeordneten Abtastschritten mittels einer optisch abbildenden Einrichtung vergrößert.

Die mit Bezug auf die erfindungsgemäße optische Sensorvorrichtung vorgestellten bevorzugten Ausführungsformen und deren Vorteile gelten entsprechend für das erfindungsgemäße Kraftfahrzeug sowie für das erfindungsgemäße Verfahren.

Mit Angaben "oben", "unten", "vorne", "hinten", "horizontal", "vertikal", "innen", "außen", "seitlich", "erste Richtung", "zweite Richtung", etc. sind bei bestimmungsgemäßem Gebrauch und bestimmungsgemäßem Anordnen der optischen Sensorvorrichtung am Kraftfahrzeug und bei einem vor dem Kraftfahrzeug stehenden und in Richtung des Kraftfahrzeugs blickenden Beobachter gegebene Positionen und Orientierungen angegeben.

Weitere Merkmale der Erfindung ergeben sich aus den Ansprüchen, den Figuren und der Figurenbeschreibung.

Im Folgenden wird die Erfindung nun anhand eines bevorzugten Ausführungsbeispiels wie auch unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs; und
- Fig. 2: eine schematische Darstellung einer Ausführungsform einer Empfangseinrichtung einer erfindungsgemäßen optischen Sensorvorrichtung.

In den Figuren sind gleiche sowie funktionsgleiche Elemente mit den gleichen Bezugszeichen versehen.

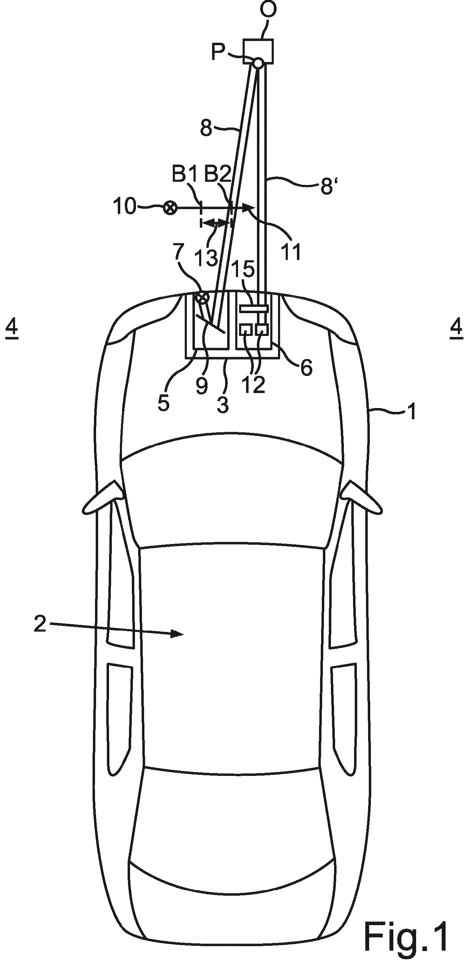

Fig. 1 zeigt ein Kraftfahrzeug 1 gemäß einer Ausführungsform der vorliegenden Erfindung in einer Draufsicht. Das Kraftfahrzeug 1 ist im vorliegenden Fall als ein Personenkraftwagen ausgebildet. Das Kraftfahrzeug 1 umfasst ein Fahrerassistenzsystem 2, welches beispielsweise als ein Parkassistenzsystem ausgestaltet sein kann. Das Kraftfahrzeug 1 weist außerdem eine optische Sensorvorrichtung 3 auf, welche insbesondere als ein Scanning-Lidar-Sensor ausgestaltet ist. Die optische Sensorvorrichtung 3 wird zum Abtasten eines Umgebungsbereiches 4 des Kraftfahrzeugs 1 verwendet. Dadurch kann beispielsweise ein Objekt O in dem Umgebungsbereich 4 des Kraftfahrzeugs erfasst werden. Außerdem können Informationen über das Objekt O, beispielsweise geometrische Abmessungen des Objektes O und/oder ein Abstand des Objektes O zu dem Kraftfahrzeug 1, von der optischen Sensorvorrichtung 3 bestimmt werden und dem Fahrerassistenzsystem 2 bereitgestellt werden.

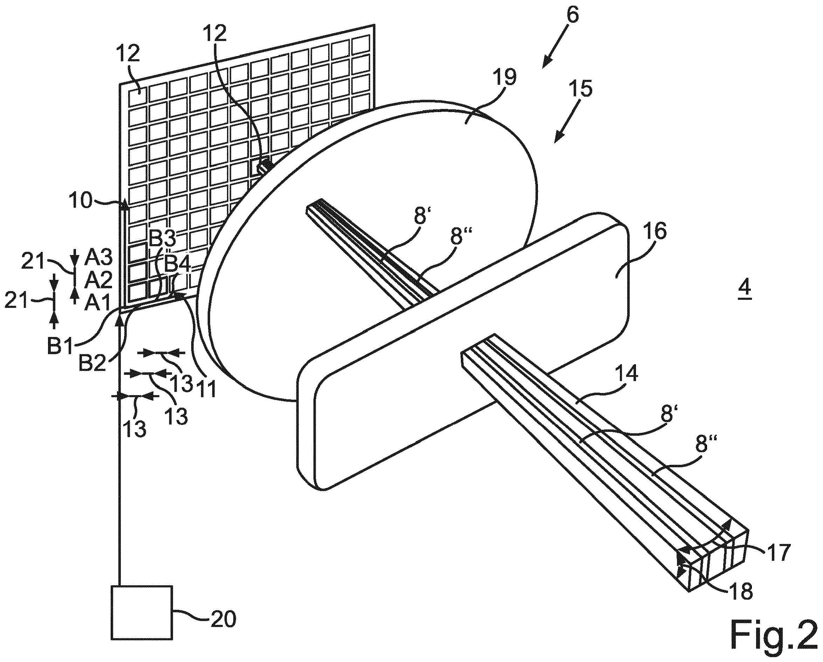

Die optische Sensorvorrichtung 3 weist eine Sendeeinrichtung 5 sowie eine Empfangseinrichtung 6 auf. Die Sendeeinrichtung 5 umfasst eine Lichtquelle 7, welche zum Aussenden eines Lichtstrahls 8 auf eine Ablenkeinrichtung 9 der Sendeeinrichtung 5 ausgebildet ist. Die Ablenkeinrichtung 9 ist dabei dazu ausgelegt, zu vorbestimmten Abtastschritten A1, A2, A3, B1, B2, B3, B4, also zeitgesteuert, den Lichtstrahl 8 um jeweils einen ersten Ablenkschrittwinkel 21 entlang einer ersten Richtung 10 (siehe Fig. 2) und/oder um jeweils einen zweiten Ablenkschrittwinkel 13 entlang einer zweiten Richtung 11 abzulenken. Die erste Richtung 10 ist insbesondere eine vertikale Raumrichtung, welche in der in Fig. 1 gezeigten Draufsicht des Kraftfahrzeugs 1 in die Zeichenebene hineinzeigt. Die zweite Richtung 11 ist insbesondere eine horizontale Raumrichtung. Dies bedeutet, dass der Lichtstrahl 8 zu jedem Abtastschritt A1, A2, A3, B1, B2, B3, B4 in eine zu dem Abtastschritt A1, A2, A3, B1, B2, B3, B4 korrespondierende Abtastsenderichtung ausgesendet wird. Damit wird der Umgebungsbereich 4 des Kraftfahrzeugs 1 zweidimensional abgetastet beziehungsweise abgescannt. Der Lichtstrahl 8 wird an einer Reflexionsposition P im Umgebungsbereich 4, an welcher sich beispielsweise das Objekt O in dem Umgebungsbereich 4 befindet, reflektiert. Die Reflexion 8' des Lichtstrahls 8 wird von der Empfangseinrichtung 6 der optischen Sensorvorrichtung 3 empfangen. Die Empfangseinrichtung 6 weist dabei eine Vielzahl von Empfangselementen 12 sowie eine optisch abbildende Einrichtung 15 auf.

Eine Ausführungsform einer solchen Empfangseinrichtung 6 der optischen Sensorvorrichtung 3 ist in Fig. 2 gezeigt. Die Empfangseinrichtung 6 weist dabei eine rasterförmige Anordnung, eine sogenannte Matrixanordnung beziehungsweise ein Array, der Empfangselemente 12 auf. Die Empfangseinrichtung 6 kann beispielsweise in einer Zeile der rasterförmigen Anordnung 150 Empfangselemente 12 und in einer Spalte der rasterförmigen Anordnung 120 Empfangselemente 12 aufweisen. Die Empfangselemente 12 können beispielsweise als Fotodioden, insbesondere als Lawinenfotodioden beziehungsweise APDs (Avalanche Photo Diode), ausgestaltet sein. Durch diese hohe Anzahl an Empfangselementen 12 kann verhindert werden, dass pro Empfangselement 12 ein besonders hoher Anteil an Störsignalen, beispielsweise Sonnenlicht aus dem Umgebungsbereich 4, empfangen wird. Dadurch weist die optische Sensorvorrichtung 3 in vorteilhafter Weise einen hohen Signal-Rausch-Abstand auf.

Dabei ist es nun vorgesehen, dass jedem Empfangselement 12 in zumindest einer der Richtungen 10, 11 zumindest zwei Abtastschritte A1, A2, A3, B1, B2, B3, B4 zugeordnet sind. Dadurch ist jedes Empfangselement 12 dazu ausgelegt, in dieser zugeordneten Richtung 10, 11 zumindest zwei Reflexionen 8', 8" des Lichtstrahls 8 zu empfangen. Hier ist jedem Empfangselement 12 genau ein Abtastschritt A1, A2, A3 entlang der ersten Richtung 10 zugeordnet. Dies bedeutet, dass nach jedem Abtastschritt A1, A2, A3 entlang der ersten Richtung 10, wobei der Lichtstrahls 8 in jedem Abtastschritt A1, A2, A3 entlang der ersten Richtung 10 um den ersten Ablenkschrittwinkel 21 abgelenkt wird, die Reflexion des Lichtstrahls 8 von einem anderen Empfangselement 12 empfangen wird. Somit entspricht eine Anzahl an Empfangselementen 12 in jeder Spalte der rasterförmigen Anordnung einer Anzahl an Abtastschritten A1, A2, A3 entlang der ersten Richtung 10.

Entlang der zweiten Richtung 11 sind jedem Empfangselement 12 zumindest zwei Abtastschritte B1, B2, B3, B4, vorzugsweise zehn Abtastschritte B1, B2, B3, B4, zugeordnet. Die Reflexion 8' entspricht dabei beispielsweise einer Reflexion des Lichtstrahls 8, welcher zu einem ersten Abtastschritt B1 entlang der zweiten Richtung 11 in eine erste Abtastsenderichtung in den Umgebungsbereich 4 ausgesendet wurde. Die Reflexion 8" entspricht dabei beispielsweise einer Reflexion des Lichtstrahls 8, welcher zu einem zweiten Abtastschritt B2 entlang der zweiten Richtung 11 in eine zweite Abtastsenderichtung in den Umgebungsbereich 4 ausgesendet wurde. Ein Winkel zwischen der ersten und der zweiten Abtastsenderichtung entlang der zweiten Richtung entspricht dabei dem zweiten Ablenkschrittwinkel 13. Dies bedeutet, dass erst nach den zumindest zwei, vorzugsweise zehn, Abtastschritten B1, B2, B3, B4 entlang der zweiten Richtung 11, wobei der Lichtstrahls 8 in jedem Abtastschritt B1, B2, B3, B4 entlang der zweiten Richtung 11 um den zweiten Ablenkschrittwinkel 13 abgelenkt wird, die Reflexionen 8', 8" des Lichtstrahls 8 von einem anderen Empfangselement 12 empfangen werden. Der erste Ablenkschrittwinkel 21 und der zweite Ablenkschrittwinkel 13 werden dabei vorzugsweise aus einem Bereich zwischen 0,05° und 0,3°, insbesondere 0,1°, ausgewählt.

Eine Reflexionsposition P des Lichtstrahls 8 in dem Umgebungsbereich 4, also beispielsweise eine Position, an welcher sich das Objekt O in dem Umgebungsbereich 4 befindet, kann anhand des empfangenden Empfangselementes 12 und/oder anhand des aktuellen Abtastschrittes A1, A2, A3, B1, B2, B3, B4 bestimmt werden. Zum Bestimmen der Reflexionsposition P kann die Empfangseinrichtung 6 eine Steuereinrichtung 20 aufweisen. Wenn beispielsweise in der ersten Richtung 10 jedem Empfangselement 12 nur ein Abtastschritt A1, A2, A3 zugeordnet ist, so kann eine erste Koordinate der Reflexionsposition P in der ersten Richtung 10, also beispielsweise eine vertikale Koordinate, direkt anhand des empfangenden Empfangselementes 12 bestimmt werden. Die Empfangseinrichtung 6 ist also in der ersten Richtung 10 ortsauflösend. Wenn beispielsweise in der zweiten Richtung 11 jedem Empfangselement 12 zehn Abtastschritte B1, B2, B3, B4 zugeordnet sind, so kann durch die Steuereinrichtung 20 eine zweite Koordinate der Reflexionsposition P in der zweiten Richtung 11, also beispielsweise eine horizontale Koordinate, anhand des empfangenden Empfangselemente 12 und anhand des aktuellen Abtastschrittes B1, B2, B3, B4 entlang der zweiten Richtung 11, welchem eine bestimmte Abtastsenderichtung des Lichtstrahls 8 zugeordnet ist, bestimmt werden. Eine dritte Koordinate der Reflexionsposition P, also der Abstand der Reflexionsposition P zu der optischen Sensorvorrichtung 3, kann anhand einer Laufzeit des Lichtstrahls 8, 8', 8" bestimmt werden.

Zum Vergrößern von Erfassungsbereichen der Empfangselemente 12, von welchen hier lediglich ein Erfassungsbereich 14 gezeigt ist, entlang derjenigen Richtung 10, 11, entlang welcher jedem Empfangselement 12 die zumindest zwei Abtastschritte A1, A2, A3, B1, B2, B3, B4 zugeordnet sind, also hier entlang der zweiten Richtung 11, weist die Empfangseinrichtung 6 die optisch abbildende Einrichtung 15 auf. Mittels der optisch abbildenden Einrichtung 15 kann gewährleistet werden, dass von jedem Empfangselement 12 die Reflexionen 8', 8" des Lichtstrahls 8 in den jeweiligen zugeordneten Abtastschritten A1, A2, A3, B1, B2, B3, B4 zuverlässig empfangen werden können.

Die optisch abbildende Einrichtung 15 ist hier zwischen den Empfangselementen 12 und dem Umgebungsbereich 4 positioniert. Insbesondere ist die optisch abbildende Einrichtung 15 dazu ausgelegt, die Erfassungsbereiche 14 so auszubilden, dass ein Öffnungswinkel 18 eines jeweiligen Erfassungsbereiches 14 entlang der ersten Richtung 10 dem ersten Ablenkschrittwinkel 21, also beispielsweise 0,1°, entspricht und ein Öffnungswinkel 17 eines jeweiligen Erfassungsbereiches 14 entlang der zweiten Richtung 11 einem zu der Anzahl an zugeordneten Abtastschritten B1, B2, B3, B4 korrespondierenden Vielfachen des zweiten Ablenkschrittwinkels 13, also bei beispielsweise zehn zugeordneten Abtastschritten B1, B2, B3, B4 1°, entspricht.

Die optisch abbildende Einrichtung 15 umfasst hier eine Zylinderlinse 16, welche dazu ausgelegt ist, den Erfassungsbereich 14 entlang der zweiten Richtung 11 zu vergrößern. Die Zylinderlinse 16 fokussiert also die Reflexionen 8', 8" des in den zugeordneten Abtastschritten B1, B2, B3, B4 ausgesendeten Lichtstrahls 8 auf das zugehörige Empfangselement 12. Außerdem weist die optische Einrichtung 15 hier eine Sammellinse 19 auf, welche zwischen den Empfangselementen 12 und der Zylinderlinse 16 positioniert ist. Die Sammellinse 19 kann zum zusätzlichen Fokussieren der Reflexionen 8', 8" auf das zugehörige Empfangselement 12 ausgelegt sein.

Es kann aber auch vorgesehen sein, dass die optisch abbildende Einrichtung 15 eine Sammellinse mit einer niedrigen Brennweite aufweist, welche die Erfassungsbereiche 14 entlang der ersten Richtung 10 und entlang der zweiten Richtung 11 aufweitet. Eine Zylinderlinse kann dann zwischen der Sammellinse mit der niedrigen Brennweite und dem Umgebungsbereich 4 positioniert werden, welche die Erfassungsbereiche 14 in der ersten Richtung 10 wieder verschmälert.

## Patentansprüche

1. Optische Sensorvorrichtung (3) für ein Kraftfahrzeug (1) zum zweidimensionalen Abtasten eines Umgebungsbereiches (4) des Kraftfahrzeugs (1), mit einer Sendeeinrichtung (5) aufweisend eine Lichtquelle (7) zum Aussenden eines Lichtstrahls (8) und eine Ablenkeinrichtung (9) zum Ablenken des Lichtstrahls (8) zu vorgegebenen Abtastschritten (A1, A2, A3, B1, B2, B3, B4) entlang einer ersten Richtung (10) um jeweils einen ersten Ablenkschrittwinkel (21) und entlang einer zweiten Richtung (11) um jeweils einen zweiten Ablenkschrittwinkel (13), und mit einer Empfangseinrichtung (6) zum Empfangen des in dem Umgebungsbereich (4) reflektierten Lichtstrahls (8', 8"),
wobei die Empfangseinrichtung (6) mehrere Empfangselemente (12) aufweist, wobei jedem Empfangselement (12) für zumindest eine der Richtungen (10, 11) zumindest zwei Abtastschritte (A1, A2, A3, B1, B2, B3, B4) zum Erfassen des in den jeweiligen Abtastschritten (A1, A2, A3, B1, B2, B3, B4) ausgesendeten und in dem Umgebungsbereich (4) reflektierten Lichtstrahls (8, 8', 8") zugeordnet sind, und die Empfangseinrichtung (6) zum Vergrößern von Erfassungsbereichen (14) der Empfangselemente (12) entlang derjenigen Richtung (10, 11) mit den zumindest zwei zugeordneten Abtastschritten (A1, A2, A3, B1, B2, B3, B4) eine optisch abbildende Einrichtung (15) aufweist,
wobei die Empfangseinrichtung (6) eine rasterförmige Anordnung der Empfangselemente (12) aufweist, wobei Zeilen der rasterförmigen Anordnung der Empfangseinrichtung (6) die Abtastschritte (A1, A2, A3) in der ersten Richtung (10) zugeordnet sind und Spalten der rasterförmigen Anordnung der Empfangseinrichtung (6) die Abtastschritte (B1, B2, B3, B4) in der zweiten Richtung (11) zugeordnet sind.

2. Optische Sensorvorrichtung (3) nach Anspruch 1,
**dadurch gekennzeichnet, dass**
jedem Empfangselement (12) ein Abtastschritt (A1, A2, A3) entlang der ersten Richtung (10) zugeordnet ist und zumindest zwei Abtastschritte (B1, B2, B3, B4) entlang der zweiten Richtung (11) zugeordnet sind.

3. Optische Sensorvorrichtung (3) nach Anspruch 1 oder 2,
**dadurch gekennzeichnet, dass**
jedem Empfangselement (12) zehn Abtastschritte (B1, B2, B3, B4) entlang der zweiten Richtung (11) zugeordnet sind.

4. Optische Sensorvorrichtung (3) nach Anspruch 2 oder 3,
**dadurch gekennzeichnet, dass**
ein Öffnungswinkel (17) eines jeweiligen Erfassungsbereiches (14) der Empfangselemente (12) entlang der ersten Richtung (10) als der erste Ablenkschrittwinkel (21) durch die optisch abbildende Einrichtung (15) vorgegeben ist und ein Öffnungswinkel (17) eines jeweiligen Erfassungsbereiches (14) der Empfangselemente (12) entlang der zweiten Richtung (11) als ein zu einer Anzahl an zugeordneten Abtastschritten (B1, B2, B3, B4) korrespondierendes Vielfaches des zweiten Ablenkschrittwinkels (13) durch die optisch abbildende Einrichtung (15) vorgegeben ist.

5. Optische Sensorvorrichtung (3) nach Anspruch 1,
**dadurch gekennzeichnet, dass**
die Empfangseinrichtung (6) in jeder Spalte der rasterförmigen Anordnung 120 Empfangselemente (12) aufweist und in jeder Zeile der rasterförmigen Anordnung 150 Empfangselemente (12) aufweist.

6. Optische Sensorvorrichtung (3) nach einem der vorhergehenden Ansprüche,
**dadurch gekennzeichnet, dass**
die Ablenkeinrichtung (9) dazu ausgelegt ist, den Lichtstrahl (8) um einen Winkel zwischen mindestens 0,05° und höchstens 0,3°, insbesondere 0,1°, als den ersten Ablenkschrittwinkel (21) entlang der ersten Richtung (10) abzulenken und den Lichtstrahl (8) um einen Winkel zwischen mindestens 0,05° und höchstens 0,3°, insbesondere 0,1°, als den zweiten Ablenkschrittwinkel (13) entlang der zweiten Richtung (11) abzulenken.

7. Optische Sensorvorrichtung (3) nach einem der vorhergehenden Ansprüche,
**dadurch gekennzeichnet, dass**
die Empfangseinrichtung (6) eine Steuereinrichtung (20) aufweist, welche dazu ausgelegt ist, anhand des empfangenden Empfangselementes (12) und/oder anhand des aktuellen Abtastschrittes (A1, A2, A3, B1, B2, B3, B4) Koordinaten einer Reflexionsposition (P) des Lichtstrahls (8) in dem Umgebungsbereich (4) in der ersten Richtung (10) und in der zweiten Richtung (11) zu bestimmen.

8. Optische Sensorvorrichtung (3) nach einem der vorhergehenden Ansprüche,
**dadurch gekennzeichnet, dass**
die Empfangseinrichtung (6) eine Steuereinrichtung (20) aufweist, welche dazu ausgelegt ist, einen Abstand einer Reflexionsposition (P) des Lichtstrahls (8) in dem Umgebungsbereich (4) zu der optischen Sensorvorrichtung (3) aus einer Laufzeit des Lichtstrahls (8, 8', 8") zu bestimmen.

9. Optische Sensorvorrichtung (3) nach einem der vorhergehenden Ansprüche,
**dadurch gekennzeichnet, dass**
die Empfangselemente (12) als Fotodioden, insbesondere Lawinenfotodioden, ausgestaltet sind und die Empfangseinrichtung (6) eine Matrixanordnung der Empfangselemente (12) aufweist.

10. Optische Sensorvorrichtung (3) nach einem der vorhergehenden Ansprüche,
**dadurch gekennzeichnet, dass**
die optisch abbildende Einrichtung (15) zum Vergrößern der Erfassungsbereiche (14) in der jeweiligen Richtung (10, 11) eine Zylinderlinse (16) zum Aufweiten der Erfassungsbereiche (14) in der jeweiligen Richtung (10, 11) aufweist.

11. Optische Sensorvorrichtung (3) nach Anspruch 10,
**dadurch gekennzeichnet, dass**
die optisch abbildende Einrichtung (15) zwischen der Zylinderlinse (16) und den Empfangselementen (12) zumindest eine Sammellinse (19) und/oder zwischen den Empfangselementen (12) und dem Umgebungsbereich (4) zumindest eine F-Theta-Linse aufweist.

12. Optische Sensorvorrichtung (3) nach einem der vorhergehenden Ansprüche,
**dadurch gekennzeichnet, dass**
die optisch abbildende Einrichtung (15) zum Vergrößern der Erfassungsbereiche (14) in der jeweiligen Richtung (10, 11) eine Sammellinse mit einer niedriger Brennweite zum Aufweiten der Erfassungsbereiche (14) entlang beider Richtungen (10, 11) und eine Zylinderlinse zum Verengen der aufgeweiteten Erfassungsbereiche (14) entlang der anderen Richtung (10, 11) aufweist.

13. Kraftfahrzeug (1) mit einer optischen Sensorvorrichtung (3) nach einem der vorhergehenden Ansprüche.

14. Verfahren zum zweidimensionalen Abtasten eines Umgebungsbereiches (4) eines Kraftfahrzeugs (1), bei welchem mittels einer Lichtquelle (7) einer Sendeeinrichtung (5) ein Lichtstrahl (8) ausgesendet wird, mittels einer Ablenkeinrichtung (9) der Sendeeinrichtung (5) der Lichtstrahl (8) zu vorgegebenen Abtastschritten (A1, A2, A3, B1, B2, B3, B4) entlang einer ersten Richtung (10) um jeweils einen ersten Ablenkschrittwinkel (21) und entlang einer zweiten Richtung (11) um jeweils einen zweiten Ablenkschrittwinkel (13) abgelenkt wird und mittels einer Empfangseinrichtung (6) der in dem Umgebungsbereich (4) reflektierte Lichtstrahl (8', 8") empfangen wird,
wobei zumindest zwei Empfangselementen (12) der Empfangseinrichtung (6) jeweils für zumindest eine der Richtungen (10, 11) zumindest zwei Abtastschritte (A1, A2, A3, B1, B2, B3, B4) zum Erfassen des in den jeweiligen Abtastschritten (A1, A2, A3, B1, B2, B3, B4) ausgesendeten und in dem Umgebungsbereich (4) reflektierten Lichtstrahls (8, 8', 8") zugeordnet werden und Erfassungsbereiche (14) der zumindest zwei Empfangselemente (12) entlang derjenigen Richtung (10, 11) mit den zumindest zwei zugeordneten Abtastschritten (A1, A2, A3, B1, B2, B3, B4) mittels einer optisch abbildenden Einrichtung (15) vergrößert werden
wobei die Empfangselemente (12) der Empfangseinrichtung (6) rasterförmig angeordnet sind, wobei Zeilen der rasterförmigen Anordnung der Empfangseinrichtung (6) die Abtastschritte (A1, A2, A3) in der ersten Richtung (10) zugeordnet werden und Spalten der rasterförmigen Anordnung der Empfangseinrichtung (6) die Abtastschritte (B1, B2, B3, B4) in der zweiten Richtung (11) zugeordnet werden.

## Claims

1. Optical sensor apparatus (3) for a motor vehicle (1) for two-dimensionally scanning a surrounding region (4) of the motor vehicle (1), having a transmission device (5) including a light source (7) for emitting a light beam (8) and a deflection device (9) for deflecting the light beam (8) to specified scanning steps (A1, A2, A3, B1, B2, B3, B4) along a first direction (10) by in each case a first deflection step angle (21) and along a second direction (11) by in each case a second deflection step angle (13), and having a reception device (6) for receiving the light beam (8', 8") reflected in the surrounding region (4),
wherein the reception device (6) has a plurality of reception elements (12), wherein each reception element (12) is assigned for at least one of the directions (10, 11) at least two scanning steps (A1, A2, A3, B1, B2, B3, B4) for capturing the light beam (8, 8', 8") that is emitted into the respective scanning steps (A1, A2, A3, B1, B2, B3, B4) and reflected in the surrounding region (4), and the reception device (6) has an optically imaging device (15) for enlarging capturing regions (14) of the reception elements (12) along that direction (10, 11) that has the at least two assigned scanning steps (A1, A2, A3, B1, B2, B3, B4),
wherein the reception device (6) has a grid-shaped arrangement of the reception elements (12), wherein rows of the grid-shaped arrangement of the reception device (6) are assigned the scanning steps (A1, A2, A3) in the first direction (10) and columns of the grid-shaped arrangement of the reception device (6) are assigned the scanning steps (B1, B2, B3, B4) in the second direction (11) .

2. Optical sensor apparatus (3) according to Claim 1,
**characterized in that**
each reception element (12) is assigned a scanning step (A1, A2, A3) along the first direction (10) and at least two scanning steps (B1, B2, B3, B4) along the second direction (11).

3. Optical sensor apparatus (3) according to Claim 1 or 2, **characterized in that**
each reception element (12) is assigned ten scanning steps (B1, B2, B3, B4) along the second direction (11).

4. Optical sensor apparatus (3) according to Claim 2 or 3,
**characterized in that**
an opening angle (17) of a respective capturing region (14) of the reception elements (12) along the first direction (10) is specified by the optically imaging device (15) as the first deflection step angle (21) and an opening angle (17) of a respective capturing region (14) of the reception elements (12) along the second direction (11) is specified by the optically imaging device (15) as a multiple of the second deflection step angle (13) corresponding to a number of assigned scanning steps (B1, B2, B3, B4).

5. Optical sensor apparatus (3) according to Claim 1,
**characterized in that**
the reception device (6) has 120 reception elements (12) in each column of the grid-shaped arrangement and 150 reception elements (12) in each row of the grid-shaped arrangement.

6. Optical sensor apparatus (3) according to one of the preceding claims,
**characterized in that**
the deflection device (9) is designed to deflect the light beam (8) by an angle of between at least 0.05° and at most 0.3°, in particular 0.1°, as the first deflection step angle (21) along the first direction (10) and to deflect the light beam (8) by an angle of between at least 0.05° and at most 0.3°, in particular 0.1°, as the second deflection step angle (13) along the second direction (11).

7. Optical sensor apparatus (3) according to one of the preceding claims,
**characterized in that**
the reception device (6) has a control device (20) that is designed to determine coordinates of a reflection position (P) of the light beam (8) in the surrounding region (4) in the first direction (10) and in the second direction (11) on the basis of the receiving reception element (12) and/or on the basis of the current scanning step (A1, A2, A3, B1, B2, B3, B4).

8. Optical sensor apparatus (3) according to one of the preceding claims,
**characterized in that**
the reception device (6) has a control device (20) that is designed to determine a distance of a reflection position (P) of the light beam (8) in the surrounding region (4) from the optical sensor apparatus (3) from a time of flight of the light beam (8, 8', 8").

9. Optical sensor apparatus (3) according to one of the preceding claims,
**characterized in that**
the reception elements (12) are embodied in the form of photodiodes, in particular avalanche photodiodes, and the reception device (6) has a matrix arrangement of the reception elements (12).

10. Optical sensor apparatus (3) according to one of the preceding claims,
**characterized in that**,
for the purposes of enlarging the capturing regions (14) in the respective direction (10, 11), the optically imaging device (15) has a cylindrical lens (16) for widening the capturing regions (14) in the respective direction (10, 11).

11. Optical sensor apparatus (3) according to Claim 10,
**characterized in that**
the optically imaging device (15) has at least one converging lens (19) between the cylindrical lens (16) and the reception elements (12) and/or at least one F-theta lens between the reception elements (12) and the surrounding region (4).

12. Optical sensor apparatus (3) according to one of the preceding claims,
**characterized in that**,
for the purposes of enlarging the capturing regions (14) in the respective direction (10, 11), the optically imaging device (15) has a converging lens having a lower focal length for widening the capturing regions (14) along both directions (10, 11) and a cylindrical lens for narrowing the widened capturing regions (14) along the other direction (10, 11).

13. Motor vehicle (1) having an optical sensor apparatus (3) according to one of the preceding claims.

14. Method for two-dimensionally scanning a surrounding region (4) of a motor vehicle (1), in which a light source (7) of a transmission device (5) is used to emit a light beam (8), a deflection device (9) of the transmission device (5) is used to deflect the light beam (8) to specified scanning steps (A1, A2, A3, B1, B2, B3, B4) along a first direction (10) by in each case a first deflection step angle (21) and along a second direction (11) by in each case a second deflection step angle (13), and a reception device (6) is used to receive the light beam (8', 8") reflected in the surrounding region (4), wherein at least two reception elements (12) of the reception device (6) are assigned for at least one of the directions (10, 11) at least two scanning steps (A1, A2, A3, B1, B2, B3, B4) for capturing the light beam (8, 8', 8") that is emitted into the respective scanning steps (A1, A2, A3, B1, B2, B3, B4) and reflected in the surrounding region (4), and an optically imaging device (15) is used to enlarge capturing regions (14) of the at least two reception elements (12) along that direction (10, 11) that has the at least two assigned scanning steps (A1, A2, A3, B1, B2, B3, B4),
wherein the reception elements (12) of the reception device (6) are arranged in the shape of a grid, wherein rows of the grid-shaped arrangement of the reception device (6) are assigned the scanning steps (A1, A2, A3) in the first direction (10) and columns of the grid-shaped arrangement of the reception device (6) are assigned the scanning steps (B1, B2, B3, B4) in the second direction (11).

## Revendications

1. Arrangement capteur optique (3) pour un véhicule automobile (1) destiné au balayage bidimensionnel d'une zone environnante (4) du véhicule automobile (1), comprenant un dispositif d'émission (5) qui possède une source de lumière (7) destinée à émettre un rayon lumineux (8) et un dispositif de déviation (9) destiné à dévier le rayon lumineux (8) vers des pas de balayage (A1, A2, A3, B1, B2, B3, B4) prédéfinis le long d'une première direction (10) respectivement selon un premier angle de pas de déviation (21) et le long d'une deuxième direction (11) respectivement selon un deuxième angle de pas de déviation (13), et comprenant un dispositif de réception (6) destiné à recevoir le rayon lumineux (8', 8") réfléchi dans la zone environnante (4),
le dispositif de réception (6) possédant plusieurs éléments de réception (12), au moins deux pas de balayage (A1, A2, A3, B1, B2, B3, B4) étant associés à chaque élément de réception (12) pour au moins l'une des directions (10, 11) en vue de détecter le rayon lumineux (8, 8', 8") émis dans les pas de balayage (A1, A2, A3, B1, B2, B3, B4) respectifs et réfléchis dans la zone environnante (4), et le dispositif de réception (6) possédant un dispositif de représentation optique (15) destiné à grossir les zones de détection (14) des éléments de réception (12) le long de ladite direction (10, 11) qui comprend les au moins deux pas de balayage (A1, A2, A3, B1, B2, B3, B4) associés,
le dispositif de réception (6) présentant un agencement en forme de grille des éléments de réception (12), les pas de balayage (A1, A2, A3) dans la première direction (10) étant associés aux lignes de l'agencement en forme de grille du dispositif de réception (6) et les pas de balayage (B1, B2, B3, B4) dans la deuxième direction (11) étant associés aux colonnes de l'agencement en forme de grille du dispositif de réception (6).

2. Arrangement capteur optique (3) selon la revendication 1, **caractérisé en ce qu'**à chaque élément de réception (12) est associé un pas de balayage (A1, A2, A3) le long de la première direction (10) et sont associés au moins deux pas de balayage (B1, B2, B3, B4) le long de la deuxième direction (11).

3. Arrangement capteur optique (3) selon la revendication 1 ou 2, **caractérisé en ce qu'**à chaque élément de réception (12) sont associés dix pas de balayage (B1, B2, B3, B4) le long de la deuxième direction (11) .

4. Arrangement capteur optique (3) selon la revendication 2 ou 3, **caractérisé en ce qu'**un angle d'ouverture (17) d'une zone de détection (14) respective des éléments de réception (12) le long de la première direction (10) est prédéfini en tant que premier angle de pas de déviation (21) par le dispositif de représentation optique (15) et un angle d'ouverture (17) d'une zone de détection (14) respective des éléments de réception (12) le long de la deuxième direction (11) est prédéfini par le dispositif de représentation optique (15) en tant que multiple du deuxième angle de pas de déviation (13) correspondant à un certain nombre de pas de balayage (B1, B2, B3, B4) associés.

5. Arrangement capteur optique (3) selon la revendication 1, **caractérisé en ce que** le dispositif de réception (6) possède 120 éléments de réception (12) dans chaque colonne de l'agencement en forme de grille et possède 150 éléments de réception (12) dans chaque ligne de l'agencement en forme de grille.

6. Arrangement capteur optique (3) selon l'une des revendications précédentes, **caractérisé en ce que** le dispositif de déviation (9) est conçu pour dévier le rayon lumineux (8) d'un angle compris entre au moins 0,05° et au plus 0,3°, notamment de 0,1°, en tant que premier angle de pas de déviation (21) le long de la première direction (10) et pour dévier le rayon lumineux (8) d'un angle compris entre au moins 0,05° et au plus 0,3°, notamment de 0,1°, en tant que deuxième angle de pas de déviation (13) le long de la deuxième direction (11).

7. Arrangement capteur optique (3) selon l'une des revendications précédentes, **caractérisé en ce que** le dispositif de réception (6) possède un dispositif de commande (20) qui est conçu pour, à l'aide de l'élément de réception (12) recevant et/ou à l'aide du pas de balayage (A1, A2, A3, B1, B2, B3, B4) actuel, déterminer les coordonnées d'une position de réflexion (P) du rayon lumineux (8) dans la zone environnante (4) dans la première direction (10) et dans la deuxième direction (11) .

8. Arrangement capteur optique (3) selon l'une des revendications précédentes, **caractérisé en ce que** le dispositif de réception (6) possède un dispositif de commande (20) qui est conçu pour déterminer un écart entre une position de réflexion (P) du rayon lumineux (8) dans la zone environnante (4) et l'arrangement capteur optique (3) à partir d'un temps de propagation du rayon lumineux (8, 8', 8").

9. Arrangement capteur optique (3) selon l'une des revendications précédentes, **caractérisé en ce que** les éléments de réception (12) sont réalisés sous la forme de photodiodes, notamment de photodiodes à avalanche, et le dispositif de réception (6) possède un agencement matriciel des éléments de réception (12).

10. Arrangement capteur optique (3) selon l'une des revendications précédentes, **caractérisé en ce que** le dispositif de représentation optique (15) destiné à grossir les zones de détection (14) dans la direction (10, 11) respective possède une lentille cylindrique (16) servant à élargir les zones de détection (14) dans la direction (10, 11) respective.

11. Arrangement capteur optique (3) selon la revendication 10, **caractérisé en ce que** le dispositif de représentation optique (15) possède au moins une lentille collectrice (19) entre la lentille cylindrique (16) et les éléments de réception (12) et/ou au moins une lentille F-thêta entre les éléments de réception (12) et la zone environnante (4).

12. Arrangement capteur optique (3) selon l'une des revendications précédentes, **caractérisé en ce que** le dispositif de représentation optique (15) destiné à grossir les zones de détection (14) dans la direction (10, 11) respective possède une lentille collectrice ayant une distance focale plus faible pour élargir les zones de détection (14) le long des deux directions (10, 11) et une lentille cylindrique pour rétrécir les zones de détection (14) élargies le long de l'autre direction (11, 10).

13. Véhicule automobile (1) comprenant un arrangement capteur optique (3) selon l'une des revendications précédentes.

14. Procédé de balayage bidimensionnel d'une zone environnante (4) d'un véhicule automobile (1), avec lequel un rayon lumineux (8) est émis au moyen d'une source de lumière (7) d'un dispositif d'émission (5), le rayon lumineux (8) est dévié au moyen d'un dispositif de déviation (9) du dispositif d'émission (5) vers des pas de balayage (A1, A2, A3, B1, B2, B3, B4) prédéfinis le long d'une première direction (10) respectivement selon un premier angle de pas de déviation (21) et le long d'une deuxième direction (11) respectivement selon un deuxième angle de pas de déviation (13), et le rayon lumineux (8', 8") réfléchi dans la zone environnante (4) est reçu au moyen d'un dispositif de réception (6),
au moins deux pas de balayage (A1, A2, A3, B1, B2, B3, B4) étant associés à au moins deux éléments de réception (12) du dispositif de réception (6) pour au moins l'une des directions (10, 11) en vue de détecter le rayon lumineux (8, 8', 8") émis dans les pas de balayage (A1, A2, A3, B1, B2, B3, B4) respectifs et réfléchis dans la zone environnante (4), et les zones de détection (14) des au moins deux éléments de réception (12) le long de ladite direction (10, 11) qui comprend les au moins deux pas de balayage (A1, A2, A3, B1, B2, B3, B4) associés sont grossies au moyen d'un dispositif de représentation optique (15),
les éléments de réception (12) du dispositif de réception (6) étant agencés en forme de grille, les pas de balayage (A1, A2, A3) dans la première direction (10) étant associés aux lignes de l'agencement en forme de grille du dispositif de réception (6) et les pas de balayage (B1, B2, B3, B4) dans la deuxième direction (11) étant associés aux colonnes de l'agencement en forme de grille du dispositif de réception (6).
